# EUROPEAN PATENT APPLICATION

(11) **EP 2 636 802 A1**
(43) Date of publication of application: **11.09.2013**
(21) Application number: 11837943.7
(22) Date of filing: 28.10.2011
(51) Int. Cl.: E02F 9/00

(54) **WORKING MACHINE**

(30) Priority: 05.11.2010 JP 2010248590
(71) Applicant: Hitachi Construction Machinery Co., Ltd., Bunkyo-ku Tokyo 112-8563 (JP)
(72) Inventor: SHIMIZU Tsuyoshi, Tsuchiura-shi Ibaraki 300-0013 (JP); NAKAMURA Masao, Tsuchiura-shi Ibaraki 300-0013 (JP); KUMAGAI Hiroshi, Tsuchiura-shi Ibaraki 300-0013 (JP)
(74) Representative: Beetz & Partner
(86) International application number: PCT/JP2011/074938
(87) International publication number: WO 2012/060293

(57) **Abstract**

[Problem] To enable reduction of such a feeling of oppression that an operator sitting on an operator's seat is oppressed by an engine room and relaxation of restriction on a rearward visual field of the operator sitting on the operator's seat.

[Solution] The invention provides a hydraulic excavator including: a revolving upperstructure 2; a working device 34 attached to the revolving upperstructure 2; an operator's cab 7 which has a rear window 16 and which is disposed in a front position of the revolving upperstructure 2; and an engine room 9 which is disposed in a rear position adjacent to the operator's cab 7 and which has a ceiling part made of a cover member 17; wherein: a part of the cover member 17 located near the operator's cab 7 is made of a face shape part, i.e. an inclined surface part 18, having a shape whose height gradually increases toward the rear of a vehicle body with the vicinity of a lower end part 16a of the rear window 16 as a start point 18a during a predetermined distance immediately after the operator's cab 7. For example, the height of the start point 18a of the inclined surface part 18 is set to be equal to or lower than the height of the lower end part 16a of the rear window 16.

## Description

### TECHNICAL FIELD

The present invention relates to a working machine such as a hydraulic excavator, in which an operator's cab having a rear window and an engine room adjacent to the operator's cab are disposed on a revolving upperstructure.

### BACKGROUND ART

Because of working environment, etc., a working machine provided with a revolving upperstructure, such as a hydraulic excavator, is restricted by the width of the revolving upperstructure and the size of rearward protrusion of a counter weight disposed at the rear of the revolving upperstructure in order to prevent the slewing radius from coming out of the vehicle width of a traveling base if possible. Accordingly, for example, in the case where a ventilation area of a heat exchanger received in an engine room disposed on the revolving upperstructure is intended to be set large, the height of the engine room needs to be set large. Particularly, it has become recently necessary to install an exhaust gas disposal device or a large muffler in accordance with regulation of exhaust gas. Thus, the height of the engine room tends to increase as the number of devices installed in the engine room increases or the size of each device increases.

A slewing type working machine such as a hydraulic excavator has been disclosed as this type working machine in Patent Literature 1. According to the background art disclosed in Patent Literature 1, the working machine has: an operator's cab, i.e. a cab provided in a front position of a revolving upperstructure, and an engine room provided in a rear position of the cab so as to be adjacent to the cab. A cooling device made of a heat exchanger, an engine, etc. are received in the engine room. The height of the engine room is set to be relatively large. A cover member forming a ceiling part of the engine room, i.e. a decorative cover is provided so as to extend substantially horizontally as a whole. Accordingly, an operator's cab side end portion of the decorative cover which forms the ceiling part of the engine room faces a relatively high position portion of the rear of the operator's cab.

Although there is no explicit description in the aforementioned Patent Literature 1, a rear window made of a glass window is usually disposed in the rear of the cab, i.e. the operator's cab, and an operator sitting on an operator's seat in the operator's cab can look at rearward of the vehicle body through the rear window.

### CITATION LIST

### PATENT LITERATURE

Patent Literature 1: Japanese Patent No. 3927429

### SUMMARY OF INVENTION

### TECHNICAL PROBLEM

According to the background art disclosed in Patent Literature 1, the decorative cover which forms the ceiling part of the engine room and which is provided so as to extend substantially horizontally as a whole is close to the rear window of the operator's cab. Accordingly, the operator sitting on the operator's seat in the operator's cab is apt to be oppressed psychologically by the engine room. Accordingly, the operator may feel it difficult to obtain comfortable handling property when the operator operates various hydraulic actuators. Moreover, the position of the decorative cover on the operator's cab side is relatively high. For this reason, when the operator sitting on the operator's seat is looking at rearward through the rear window, the visual field of the operator is blocked by the decorative cover so that the operator cannot see well and the rearward visual field of the operator is apt to be restricted. Accordingly, there is a fear that the performance of work which is carried out by the operator while the operator is looking at rearward may be lowered due to the restriction on the rearward visual field in the background art.

The present invention is accomplished based on the actual circumstances in the aforementioned background art. An object of the invention is to provide a working machine which enables reduction of such a feeling of oppression that an operator sitting on an operator's seat is oppressed by an engine room and relaxation of restriction on a rearward visual field of the operator sitting on the operator's seat.

### SOLUTION TO PROBLEM

In order to achieve the object, according to the invention, there is provided a working machine including: a revolving upperstructure; a working device which is attached to the revolving upperstructure; an operator's cab which has a rear window and which is disposed in a front position of the revolving upperstructure; and an engine room which is disposed in a rear position adjacent to the operator's cab and which has a ceiling part made of a cover member; characterized in that: a part of the cover member located near the operator's cab is made of a face shape part having a shape whose height gradually increases toward the rear of a vehicle body with the vicinity of a lower end portion of the rear window as a start point during a predetermined distance immediately after the operator's cab.

According to the invention configured thus, the shape of the part located near the operator's cab, of the cover member which forms the ceiling part of the engine room is made of the face shape part whose height gradually increases toward the rear of the vehicle body with the vicinity of the lower end portion of the rear window of the operator's cab as the start point during the predetermined distance immediately after the operator's cab so that the height of the ceiling part of the engine room is lowered during the predetermined distance immediately after the operator's cab. Accordingly, a space portion corresponding to the aforementioned predetermined distance can be formed between the rear window of the operator's cab and the ceiling part of the engine room. The space portion can reduce such a feeling of oppression that an operator sitting on an operator's seat in the operator's cab is oppressed by the engine room. In addition, according to the invention, the visual field lower limit of the rearward visual field of the operator sitting on the operator's seat can be lowered because of the formation of the aforementioned space portion when the position of the cover member which forms the ceiling part of the engine room is higher than an eye position of the operator sitting on the operator's seat. Accordingly, restriction on the rearward visual field of the operator sitting on the operator's seat can be relaxed.

In this manner, according to the invention, the visual field lower limit of the rearward visual field can be lowered. Accordingly, when a rearview mirror is disposed, the length of a stay supporting the rearview mirror can be set short.

The invention having the aforementioned configuration is characterized in that the height of the start point of the face shape part is set to be equal to or lower than the height of the lower end portion of the rear window.

According to the invention configured thus, the space portion formed between the rear window of the operator's cab and the ceiling part of the engine room can be kept so large as to contribute to reduction of such a feeling of oppression that the operator sitting on the operator's seat is oppressed by the engine room. In addition, the operator sitting on the operator's seat may break the rear window of the operator's cab to escape out of the operator's cab when there is an accident that the operator's cab is covered with soil etc. in work etc. performed by the construction machine. According to the invention, a large escape region corresponding to the whole of the rear window can be ensured for such operator's escape.

In addition, the invention having the aforementioned configuration is characterized in that the face shape part of the cover member is disposed to be out of a rotational locus which is virtually drawn by the lower end portion of the rear window when the rear window is rotated on an upper end portion of the rear window toward the engine room.

Similarly to the aforementioned configurations, in the invention configured thus, the space portion formed between the rear window of the operator's cab and the ceiling part of the engine room can be enlarged so as to contribute to reduction of such a feeling of oppression that the operator sitting on the operator's seat is oppressed by the engine room. In addition, a large escape region corresponding to the whole of the rear window can be ensured when the operator breaks the rear window of the operator's seat to escape out of the operator's cab.

In addition, the invention having the aforementioned configuration is characterized in that: the cover member of the engine room includes the face shape part, and an engine cover which is provided so horizontally as to be consecutive to the face shape part and which can be opened/closed; and a handle which is attached to the engine cover and which is used when the engine cover is opened/closed is provided and disposed in the vicinity of an end portion of the engine cover located near the face shape part.

In the invention configured thus, when the engine cover is opened for maintenance and inspection of devices received in the engine room, a hand can be put into the handle and hold the handle in the space portion formed between the rear window of the operator's cab and the ceiling part of the engine room so that an operation of opening/closing the engine cover can be performed easily.

In addition, the invention having the aforementioned configuration is characterized in that a heat exchanger is disposed in a place in the engine room just under the face shape part of the cover member.

In the invention configures thus, the portion in the engine room just under the face shape part of the cover member can be used as a space where the heat exchanger having a relatively suppressed height is disposed.

### ADVANTAGEOUS EFFECTS OF INVENTION

According to the invention, the part of the cover member which forms the ceiling part of the engine room located in the vicinity of the operator's cab is made of a face shape part having a shape whose height gradually increases toward the rear of the vehicle body with the vicinity of the lower end portion of the rear window of the operator's cab as the start point during a predetermined distance immediately after the operator's cab so that a space portion corresponding to the aforementioned predetermined distance can be formed between the rear window of the operator's cab and the ceiling part of the engine room. The space portion can reduce such a feeling of oppression that an operator sitting on the operator's seat is oppressed by the engine room, so that comfortable handling property can be ensured compared with the background art. In addition, according to the invention, a visual field lower limit of the rearward visual field of the operator sitting on the operator's seat can be lowered due to the formation of the aforementioned space portion. In this manner, restriction on the rearward visual field of the operator sitting on the operator's seat can be relaxed so that the performance of work performed by the operator while the operator is looking at rearward of the vehicle body can be improved compared with the background art.

### BRIEF DESCRIPTION OF DRAWINGS

[Fig. 1] A side view showing a hydraulic excavator formed as a first embodiment of a working machine according to the invention.
[Fig. 2] A perspective view showing a revolving upperstructure provided in the hydraulic excavator shown in Fig. 1.
[Fig. 3] An enlarged side sectional view of main part of the revolving upperstructure shown in Fig. 2.
[Fig. 4] A view showing functions and effects of the hydraulic excavator according to the first embodiment.
[Fig. 5] A side sectional view showing main part of a second embodiment of the invention.
[Fig. 6] A side sectional view showing main part of a third embodiment of the invention.
[Fig. 7] A side sectional view showing main part of a fourth embodiment of the invention.
[Fig. 8] A side sectional view showing a modification of the first embodiment of the invention.
[Fig. 9] A side sectional view showing a modification of the second embodiment of the invention.

### DESCRIPTION OF EMBODIMENTS

Embodiments of a working machine according to the invention will be described below with reference to the drawings.

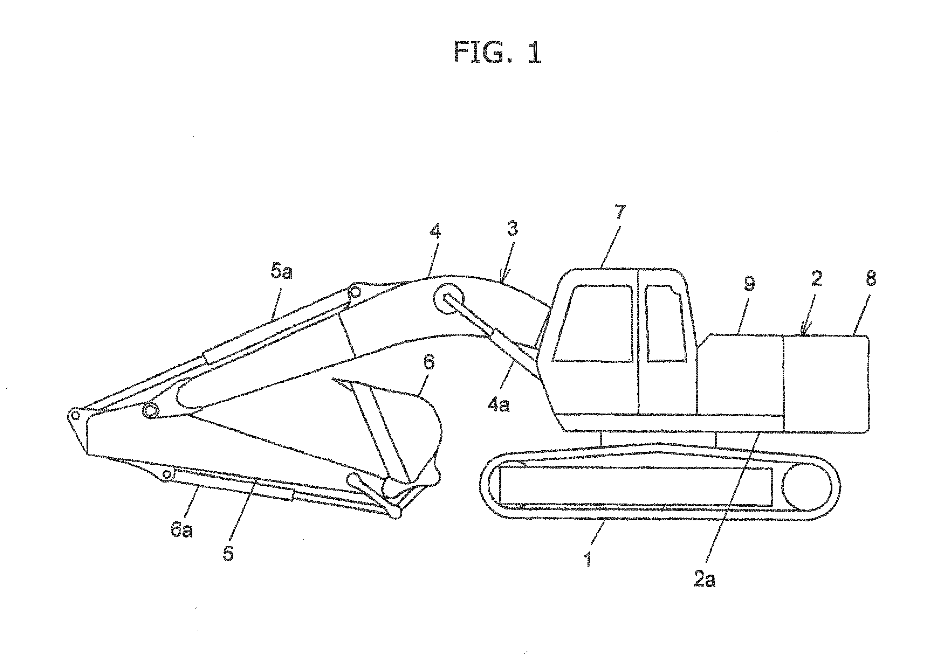

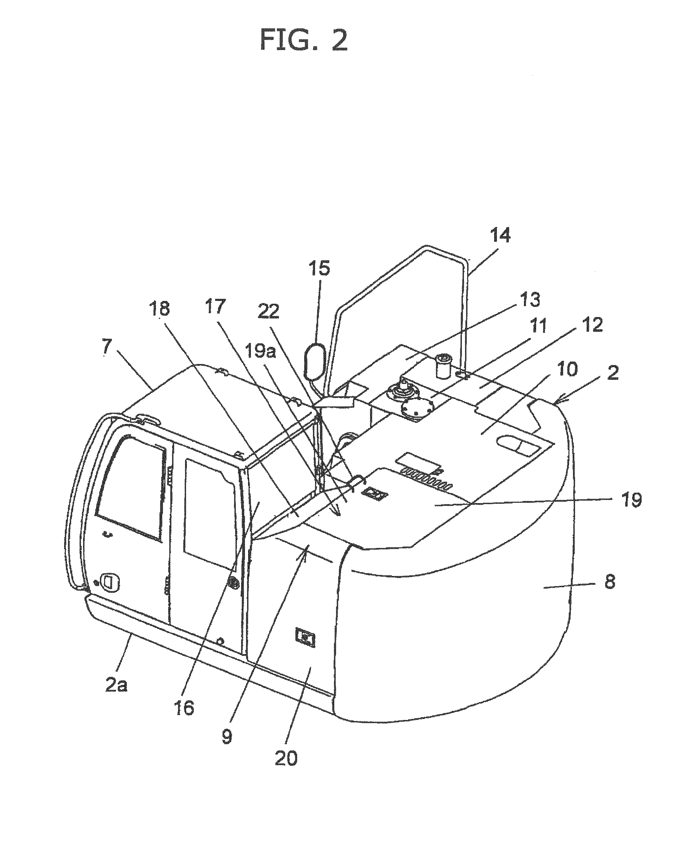

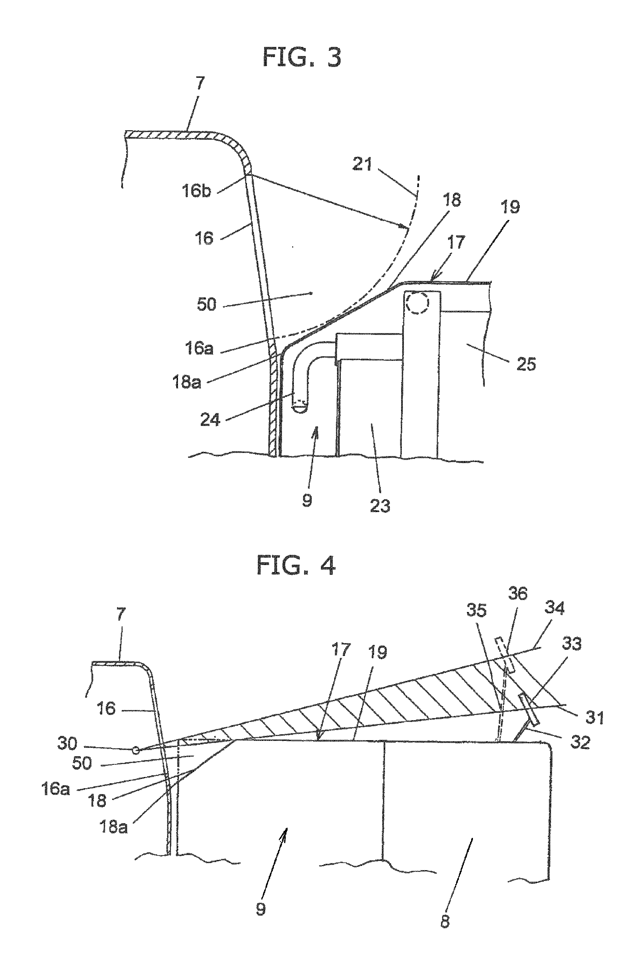

Fig. 1 is a side view showing a hydraulic excavator formed as a first embodiment of a working machine according to the invention. Fig. 2 is a perspective view showing a revolving upperstructure provided in the hydraulic excavator shown in Fig. 1. Fig. 3 is an enlarged side sectional view of main part of the revolving upperstructure shown in Fig. 2.

For example, the working machine according to the first embodiment of the invention is made of a hydraulic excavator. As shown in Fig. 1, the hydraulic excavator has: a traveling base 1; a revolving upperstructure 2 which is disposed on the traveling base 1; and a working device 3 which is attached to the revolving upperstructure 2 so as to be rotatable vertically. The working device 3 has: a boom 4 which is attached to the revolving upperstructure 2 so as to be rotatable vertically; a boom cylinder 4a which actuates the boom 4; an arm 5 which is attached to a front end of the boom 4 so as to be rotatable vertically; an arm cylinder 5a which actuates the arm 5; a bucket 6 which is attached to a front end of the arm 5 so as to be rotatable vertically; and a bucket cylinder 6a which actuates the bucket 6. The hydraulic excavator can perform various kinds of work such as soil excavation work by traveling the traveling base 1 or slewing the revolving upperstructure 2 and rotating the working device 3 vertically.

As shown also in Fig. 2, an operator's cab 7 is disposed in a front position of a slewing frame 2a of the revolving upperstructure 2 while a counter weight 8 is disposed in a rear position thereof. An engine room 9 in which heat exchangers, an engine etc. are received is disposed in a rear position adjacent to the operator's cab 7 with a predetermined gap, that is, between the operator's cab 7 and the counter weight 8.

As shown in Fig. 2, a rear window 16 made of a glass window is disposed in a rear part of the operator's cab 7. For example, the rear window 16 is made of a fixed window which cannot be opened/closed.

A ceiling part of the engine room 9 is made of a cover member 17. A side door 20 which is opened/closed for work of maintaining and inspecting devices in the engine room 9 is provided in a side part of the engine room 9. A large number of vents which lead outside air into the engine room 9 are formed in the side door 20.

As shown in Fig. 2, an upper cover 10 is disposed on a right side of the cover member 17 of the engine room 9 and in a front position of the counter weight 8. A hydraulic pump etc. driven by the engine is put below the upper cover 8. A hydraulic oil tank 11 and a fuel tank 12 are disposed in a forward right position of the upper cover 10. A right front cover 13 is disposed in a front position of the hydraulic oil tank 11 and the fuel tank 12. A control valve is disposed below the right front cover 13. A handrail 14 for making it easy to ride on an upper part of the revolving upperstructure 2 is provided on the revolving upperstructure 2. A right back mirror 15 is attached to an operator's cab 7 side part of the handrail 14.

As shown in Fig. 3, in the hydraulic excavator according to the first embodiment, a part of the cover member 17 located near the operator's cab 7 is made of a face shape part having a shape whose height gradually increases toward the rear of a vehicle body with the vicinity of a lower end part 16a of the rear window 16 as a start point 18a during a predetermined distance immediately after the operator's cab 7. The face shape part is, for example, made of an inclined surface part 18. The width of the inclined surface part 18 is set, for example, to be equal to the width of the rear part of the operator's cab 7 where the rear window 16 is provided.

For example, the aforementioned predetermined distance immediately after the operator's cab 7 is set in accordance with the layout form of an oil cooler 23, a pipe arrangement 24, etc. received in the engine room 9. The pipe arrangement 24 connects the oil cooler 23 and the aforementioned control valve to each other.

For example, the height of the start point 18a of the aforementioned inclined surface part 18 is set as a height equal to or lower than the lower end part 16a of the rear window 16 of the operator's cab 7.

The cover member 17 of the aforementioned engine room 9 includes the inclined surface part 18, and an engine cover 19 which is provided so horizontally as to be consecutive to the inclined surface part 18 and which can be opened/closed vertically. A handle 22 used when the engine cover 19 is opened/closed is attached to the engine cover 19. As shown in Fig. 2, the handle 22 is disposed in the vicinity of an end part 19a of the engine cover 19 located near the inclined surface part 18.

As shown in Fig. 3, the inclined surface part 18 of the cover member 17 which forms the ceiling part of the engine room 9 is disposed so as to be located out of a rotational locus 21 which is virtually drawn by the lower end part 16a when the rear window 16 is rotated on an upper end part 16b of the rear window 16 toward the engine room 9. For example, the inclined surface part 18 is set to have such an inclination angle that the inclined surface part 18 is substantially tangent to the rotational locus 21.

Fig. 4 is a view for explaining functions and effects of the hydraulic excavator according to the first embodiment.

As described above, in the hydraulic excavator according to the first embodiment, the part located near the operator's cab 7, of the cover member 17 which forms the ceiling part of the engine room 9 is made of the inclined surface part 18 whose height gradually increases toward the rear of the vehicle body with the vicinity of the lower end part 16a of the rear window 16 of the operator's cab 7 as the start point 18a during the predetermined distance immediately after the operator's cab 7. In this manner, the ceiling part of the engine room 9 is lowered during the predetermined distance immediately after the operator's cab 7, so that a space portion 50 corresponding to the aforementioned predetermined distance can be formed between the rear window 16 of the operator's cab 7 and the ceiling part of the engine room 9 as shown in Fig. 4. The space portion 50 can reduce such a feeling of oppression that the operator sitting on the operator's seat of the operator's cab 7 is oppressed by the engine room 9. Accordingly, comfortable handling property can be ensured.

When the position of the cover member 17 which forms the ceiling part of the engine room 9 in the hydraulic excavator according to the first embodiment is higher than an eye position 30 of the operator sitting on the operator's seat as shown in Fig. 4, a visual field lower limit 31 of the rearward visual field of the operator sitting on the operator's seat through the rear window 16 can be made lower than a visual field lower limit 34 in the case of the background-art hydraulic excavator, due to the formation of the aforementioned space portion 50. Accordingly, restriction on the rearward visual field of the operator sitting on the operator's seat can be relaxed so that the performance of work performed by the operator while the operator is looking at rearward of the vehicle body can be improved.

In this manner, the visual field lower limit 31 of the rearward visual field in the hydraulic excavator according to the first embodiment can be lowered. Accordingly, when, for example, a rearview mirror 33 is disposed on the counter weight 8 as shown in Fig. 4, the length of a stay 32 which supports the rearview mirror 33 can be set to be shorter than the length of a stay 35 in the case where a rearview mirror 36 is disposed in the background-art hydraulic excavator. In this manner, in the hydraulic excavator according to the first embodiment, the rearview mirror 33 can be supported stably and the position of the rearview mirror 33 can be adjusted easily compared with the case where the rearview mirror 36 is disposed in the background-art hydraulic excavator.

In the first embodiment, the height of the start point 18a of the inclined surface part 18 is set to be equal to or lower than the height of the lower end part 16a of the rear window 16. Accordingly, the space portion 50 formed between the rear window 16 of the operator's cab 7 and the ceiling part of the engine room 9 can be kept large to thereby contribute to reduction of such a feeling of oppression that the operator sitting in the operator's cab 7 is oppressed by the engine room 9. In addition, when an accident that the operator's cab 7 is covered with soil etc. occurs in work etc. performed by the hydraulic excavator, it may be likely that the operator sitting on the operator's seat will break the rear window 16 of the operator's cab 7 to escape out of the operator's cab 7. According to the first embodiment, a large escape region corresponding to the whole of the rear window 16 can be ensured for the aforementioned operator's escape from the rear window 16.

In the first embodiment, the inclined surface part 18 of the cover member 17 is disposed out of the virtual rotational locus 21 of the rear window 16 as shown in Fig. 3. Accordingly, the space portion 50 can be enlarged for another reason than the aforementioned description to thereby contribute to reduction of such a feeling of oppression that the operator sitting on the operator's seat is oppressed by the engine room 9. When the operator breaks the rear window 16 of the operator's cab 7 to escape out of the operator's cab 7, a large escape region corresponding to the whole of the rear window 16 can be ensured in the same manner as described above.

In the first embodiment, the handle 22 for opening/closing the engine cover 19 is disposed in the vicinity of the end part 19a of the engine cover 19 located near the inclined surface part 18 of the cover member 17 as shown in Fig. 2. To open the engine cover 19 and maintain and inspect the devices such as heat exchangers such as the oil cooler 23, an intercooler 25, and a not-shown radiator which are received in the engine room 9, a hand can be put into the handle 22 and hold the handle 22 in the space portion 50 formed between the rear window 16 of the operator's cab 7 and the ceiling part of the engine room 9, so that the handle 22 permits the engine cover 19 to be operated to be opened/closed easily. In this manner, working efficiency of maintenance and inspection performed in the engine room 9 with the engine cover 19 opened can be improved.

In the first embodiment, the inside part of the engine room 9 just under the inclined surface part 18 of the cover member 17 which forms the ceiling part of the engine room 9 can be used as a space where the heat exchangers, i.e. the oil cooler 23, the not-shown radiator, etc. each having a relatively suppressed height are disposed.

In the first embodiment, the face shape part of the cover member 17 having a shape whose height gradually increases during a predetermined distance immediately after the operator's cab 7 is made of the inclined surface part 18 having a simple shape. Accordingly, the face shape part of the cover member 17 can be manufactured easily.

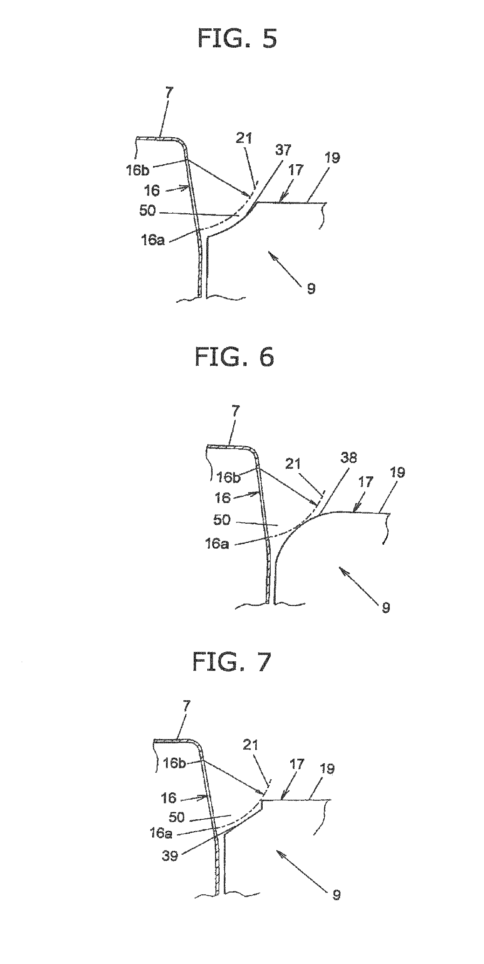

Fig. 5 is a side sectional view showing main part of a second embodiment of the invention. Fig. 6 is a side sectional view showing main part of a third embodiment of the invention. Fig. 7 is a side sectional view showing main part of a fourth embodiment of the invention.

For example, a subject of the second embodiment shown in Fig. 5 is the same hydraulic excavator as that in the aforementioned first embodiment. In the second embodiment, the face shape part of the cover member 17 forming the ceiling part of the engine room 9, i.e. the face shape part having a shape whose height gradually increases toward the rear of the vehicle body with the vicinity of the lower end part 16a of the rear window 16 as the start point during a predetermined distance immediately after the operator's cab 7 is made of a concavely curved surface part 37 along the rotational locus 21 virtually drawn. The remaining configuration is the same as that in the first embodiment. The second embodiment configured thus can obtain the same functions and effects as those in the first embodiment. In the second embodiment, a larger space portion 50 can be kept between the rear window 16 of the operator's cab 7 and the ceiling part of the engine room 9 and the stiffness of the face shape part of the cover member 17 can be enhanced.

For example, a subject of the third embodiment shown in Fig. 6 is the same hydraulic excavator as that in the aforementioned first embodiment. In the third embodiment, the face shape part of the cover member 17 is made of a convexly curved surface part 38. The remaining configuration is the same as that in the first embodiment. The third embodiment configured thus can obtain the same functions and effects as those in the first embodiment. In the third embodiment, the stiffness of the face shape part of the cover member 17 can be enhanced.

For example, a subject of the fourth embodiment shown in Fig. 7 is the same hydraulic excavator as that in the aforementioned first embodiment. In the fourth embodiment, the face shape part of the cover member 17 is made of a stepped surface part 39. The remaining configuration is the same as that in the first embodiment. The fourth embodiment configured thus can obtain the same functions and effects as those in the first embodiment. In the fourth embodiment, the face shape part of the cover member 17 can be formed into a shape suitable to the size of the shape of any device such as any heat exchanger disposed in the engine room 9. Accordingly, a larger space portion 50 can be kept between the rear window 16 of the operator's cab 7 and the ceiling part of the engine room 9.

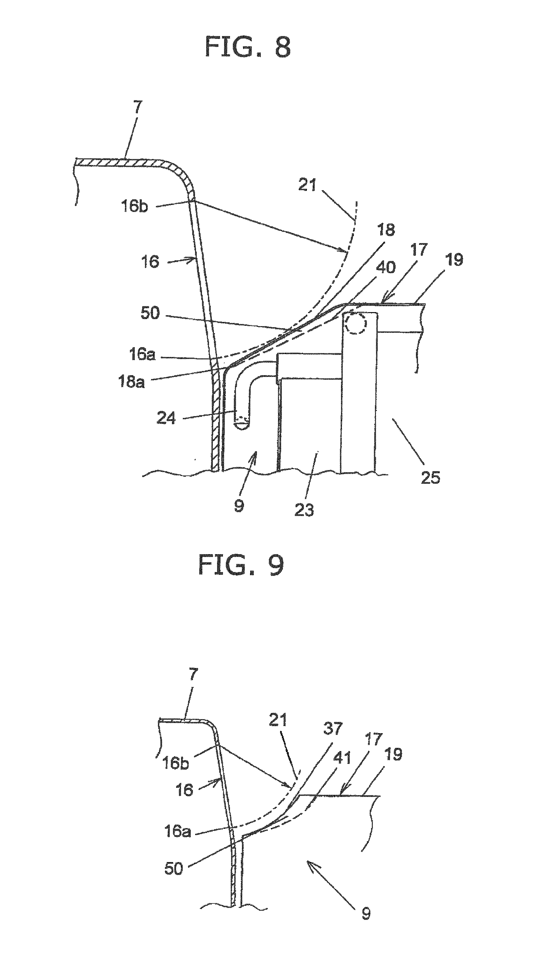

Fig. 8 is a side sectional view showing a modification of the first embodiment of the invention. Fig. 9 is a side sectional view showing a modification of the second embodiment of the invention.

In the aforementioned first to fourth embodiments, the face shape part of the cover member 17 forming the ceiling part of the engine room 9 is formed into a shape corresponding to the virtual rotational locus 21 of the rear window 16. However, in the case where, for example, the face shape part is made of an inclined surface part, the face shape part may be formed like an inclined surface part 40 designated by the broken line in Fig. 8 so as to be lower than the inclined surface part 18 in the first embodiment. In the case where the face shape part is made of a concavely curved surface part, the face shape part may be formed like a concavely curved surface part 41 designated by the broken line in Fig. 9 so as to be lower than the concavely curved surface part 41 in the second embodiment. When the face shape part is formed either like the inclined surface part 40 shown in Fig. 8 or like the concavely curved surface part 41 shown in Fig. 9, a further larger space portion 50 can be ensured.

Although the rear window 16 of the operator's cab 7 in each of the aforementioned embodiments is made of a fixed window which cannot be opened/closed, the rear window 16 may be made of a window which can be opened/closed.

Although the start point of the face shape part of the cover member 17 in each of the aforementioned embodiments is set to be equal to or lower than the lower end part 16a of the rear window 16, the start point of the face shape part located immediately after the operator's cab 7 may be set at a position slightly higher than the lower end part 16a of the rear window 16 as long as there is no obstacle when an operator in the operator's cab 7 breaks the rear window 16 to escape out of the operator's cab 7.

Although the width of the face shape part of the cover member 17 in each of the aforementioned embodiments is set to be equal to the width of the rear part of the operator's cab 7, the width of the face shape part may be set to be larger than the width of the rear part of the operator's cab 7. Conversely, the width of the face shape part may be set to be slightly smaller than the width of the rear part of the operator's cab 7 as long as there is no obstacle when an operator in the operator's cab 7 breaks the rear window 16 to escape out of the operator's cab 7.

### REFERENCE SIGNS LIST

- 2: revolving upperstructure
- 3: working device
- 7: operator's cab
- 8: counter weight
- 9: engine room
- 16: rear window
- 16a: lower end part
- 16b: upper end part
- 17: cover member
- 18: inclined surface part (face shape part)
- 18a: start point
- 19: engine cover
- 19a: end part
- 21: rotational locus
- 22: handle
- 23: oil cooler
- 25: intercooler
- 30: eye position
- 31: visual field lower limit
- 32: stay
- 33: rearview mirror
- 37: concavely curved surface part (face shape part)
- 38: convexly curved surface part (face shape part)
- 39: stepped surface part (face shape part)
- 40: inclined surface part (face shape part)
- 41: concavely curved surface part (face shape part)
- 50: space portion

## Claims

1. A working machine comprising: a revolving upperstructure; a working device which is attached to the revolving upperstructure; an operator's cab which has a rear window and which is disposed in a front position of the revolving upperstructure; and an engine room which is disposed in a rear position adjacent to the operator's cab and which has a ceiling part made of a cover member; **characterized in that**:
a part of the cover member located near the operator's cab is made of a face shape part having a shape whose height gradually increases toward the rear of a vehicle body with the vicinity of a lower end part of the rear window as a start point during a predetermined distance immediately after the operator's cab.

2. A working machine according to Claim 1, **characterized in that**:
the height of the start point of the face shape part is set to be equal to or lower than the height of the lower end part of the rear window.

3. A working machine according to Claim 1, **characterized in that**:
the face shape part of the cover member is disposed to be out of a rotational locus which is virtually drawn by the lower end part of the rear window when the rear window is rotated on an upper end part of the rear window toward the engine room.

4. A working machine according to Claim 1, **characterized in that**:
the cover member of the engine room includes the face shape part, and an engine cover which is provided so horizontally as to be consecutive to the face shape part and which can be opened/closed; and
a handle which is attached to the engine cover and which is used when the engine cover is opened/closed is provided and disposed in the vicinity of an end part of the engine cover located near the face shape part.

5. A working machine according to Claim 1, **characterized in that**:
a heat exchanger is disposed in a place in the engine room just under the face shape part of the cover member.
